# EUROPÄISCHE PATENTANMELDUNG

(11) **EP 1 322 125 A1**
(43) Veröffentlichungstag der Anmeldung: **25.06.2003**
(21) Anmeldenummer: 01130474.8
(22) Anmeldetag: 20.12.2001
(51) Int. Cl.: H04Q 7/22, G08G 1/0968

(54) **Verfahren zur Lokalisierung von Orten mit Hilfe eines Sprachservers**

(71) Anmelder: SIEMENS AKTIENGESELLSCHAFT, 80333 München (DE)
(72) Erfinder: Priem, Xavier, 22560 Trebeurden (FR)

(57) **Zusammenfassung**

Die Erfindung betrifft ein Verfahren zur Bereitstellung von Informationen mit Hilfe von Spracherkennung in einem Sprachserver (Vox). Bei dem erfindungsgemäßen Verfahren wird von einem Telekommunikationsendgerät (MT), z.B. einem Mobiltelefon, eine Sprachverbindung zu einem Sprachserver (Vox) hergestellt und eine Information angefordert. Im Sprachserver (Vox) wird mittels Spracherkennung die angeforderte Information analysiert. Die gewünschte Information wird dann bestimmt und als Sprachinformation von dem Sprachserver (Vox) an das Telekommunikationsendgerät (MT) übermittelt. Das erfindungsgemäße Verfahren hat den Vorteil, ohne eigenes, für das Verfahren spezifisches Endgerät zu funktionieren. Es ist aufwandsarm, flexibel, erlaubt Lokalisierung mit hoher Präzision und erfordert vom Teilnehmer keine Voraussetzung hinsichtlich seiner technischen Kenntnisse.

## Beschreibung

Die Erfindung betrifft ein Verfahren zur Bereitstellung von Informationen, insbesondere zur Lokalisierung eines Ortes, mit Hilfe von Spracherkennung in einem Sprachserver.

Die Verbreitung von Mobiltelefonen hat zu der Entwicklung von neuen Navigationssystemen bzw. -diensten geführt. Es besteht ein beträchtlicher Bedarf für auf Informationen bezogene Dienstleistungen, bei denen der Teilnehmer mit benötigten oder gewünschten Informationen versorgt wird. Das wichtigste Beispiel für solch einen Dienst ist die Bestimmung des Ortes, wo sich der Teilnehmer aufhält, d.h. die Lokalisierung des Teilnehmers.

In der Vergangenheit wurden verschiedene Lokalisierungsdienste entwickelt. Einer der ältesten Lokalisierungsdienste ist unter den Akronymen GPS (Global Positioning System) bekannt. Die Lokalisierung geschieht bei dem GPS-System mit Hilfe eines Satellitennetzwerkes. Geräte zur Lokalisierung im Rahmen des GPS-Systems sind im Handel erhältlich und werden beispielsweise in Automobilen genutzt, um dem Fahrer ein Navigationssystem zur Verfügung zu stellen. Das GPS-System hat den Nachteil, dass der Teilnehmer ein eignes Gerät benötigt, um den Dienst in Anspruch zu nehmen.

Daneben gibt es Lokalisierungsdienste, bei denen die Position des Teilnehmers mit Hilfe seines Mobiltelefons ermittelt wird. Bei der einfachsten Form dieses Verfahrens wird die Zelle, in der sich der Teilnehmer befindet, bzw. die Basisstation, mit der das Mobiltelefon des Teilnehmers kommuniziert, bestimmt. Bei fortgeschrittenen Verfahren wird das Mobiltelefon des Teilnehmers von mehr als einer Basisstation angepeilt und die Position des Teilnehmers aufgrund von Lauf-Zeitunterschieden der übertragenen Signale ermittelt. Trotzdem ist die Genauigkeit dieses Dienstes beschränkt, was insbesondere in Ballungsgebieten und Stadtzentren zu unbefriedigenden Ergebnissen führt.

Beide vorgestellten Verfahren haben den Nachteil, dass sie nur die Lokalisierung des Teilnehmers zulassen. Der Teilnehmer hat nicht die Möglichkeit, die Position eines Ziels, zu dem er gelangen möchte, zu erhalten. Die Lokalisierung von Zielen kann mit Hilfe eines Internetendgerätes durch die Eingabe relevanter Textinformationen realisiert werden. Dieses Verfahren ist aber nicht an die Bedürfnisse des mobilen Teilnehmers angepasst, der unterwegs, beispielsweise während einer privaten oder geschäftlichen Reise, Informationen über sein Ziel bzw. Orientierungshilfen benötigt.

Die Erfindung hat zur Aufgabe ein Verfahren anzugeben, durch welches mobilen Teilnehmer eine flexible Informationsversorgung bereitgestellt wird.

Die Aufgabe wird durch den Gegenstand des Anspruchs 1 gelöst.

Bei dem erfindungsgemäßen Verfahren wird vom Teilnehmer mit Hilfe eines Telekommunikationsendgeräts eine Sprachverbindung zu einem Sprachserver hergestellt. Mit Hilfe von Spracheingaben des Teilnehmers die von dem Telekommunikationsendgerät an den Sprachserver übermittelt werden, wird vom Teilnehmer eine Information angefordert. Die übermittelten Spracheingaben werden im Sprachserver mit Hilfe von Spracherkennung analysiert. Mittels der analysierten Spracheingaben wird die angeforderte Information bestimmt und als Sprachinformation von dem Sprachserver an das Telekommunikationsendgerät übertragen (Anspruch 1). Das erfindungsgemäße Verfahren erlaubt einen hohen Grad von Mobilität, wenn als Telekommunikationsendgerät ein Mobiltelefon benutzt wird (Anspruch 2). Der Teilnehmer kann so z.B. eine Lokalisierungsinformation anfordern (Anspruch 3). Bei dieser Lokalisierungsinformation kann es sich um die Position des Teilnehmers oder um die Position eines Ziels, zu dem der Teilnehmer gelangen möchte, handeln.

Das erfindungsgemäße Verfahren hat den Vorteil, dass es im Gegensatz zu dem GPS-Verfahren ohne eigenes, für das Verfahren spezifisches Endgerät funktioniert. Für das Verfahren kann das Mobiltelefon des Teilnehmers verwendet werden, was einen Preisvorteil im Vergleich zum GPS-System darstellt. Im Gegensatz zur Lokalisierung mit Hilfe von Basisstationen eines Mobiltelefondienstes ist die Auflösung bzw. die Präzision - in der Fachliteratur findet sich auch der Ausdruck Granularität - bei der Lokalisierung nicht begrenzt. Beispielsweise kann das erfindungsgemäße Verfahren auch zur Lokalisierung von Orten innerhalb eines Gebäudes, eines Gebäudekomplexes oder eines Geländes bzw. eines Campus verwendet werden (Anspruch 10). Im Gegensatz zur herkömmlichen Ortsbestimmung mit Hilfe der Peilung eines GMS oder UMTS Mobiltelefons kann bei dem erfindungsgemäßen Verfahren nicht nur der Ort des Teilnehmers bzw. des Mobiltelefons sondern auch ein Zielort bestimmt werden (Anspruch 11). Das Verfahren ist aufwandsarm und erfordert vom Teilnehmer keine Voraussetzung hinsichtlich seiner technischen Kenntnisse.

Für sprachbezogene Dienste wurden Server entwickelt, die die Verarbeitung von Sprachinformationen und Sprachausgabe unterstützen. Häufig verfügen derartige Server - im Rahmen dieser Anmeldung als Sprachserver bezeichnet - auch über Mittel zum Koordinieren und Steuern von Abläufen bei sprachbasierten Diensten und bei dem Zugriff auf Content Server, d.h. Server mit dienstrelevanten Daten. Sprachserver sind in der Regel mit einer IVR (interactive voice responce) Funktionalität und - nach Maßgabe der unterstützten Dienste - mit weiteren Mitteln, wie Spracherkennung und Software zur Übertragung von Textinformationen in Sprachinformationen ausgestattet.

Ein Beispiel für einen Server mit Sprachfunktionalität ist der von der Firma Siemens AG entwickelte VoxPortal™ Server, zu dem beispielsweise in der Produktbeschreibung "VoxPortal™: A member of the SURPASS solution family" Informationen verfügbar sind. Diese Produktbeschreibung wurde im Jahr 2001 von Siemens Information and Communication Networks unter der Bestellnummer A50001-N2-W11-2-7600 herausgegeben. Der VoxPortal™ Server unterstützt die VoiceXML (Voice extensible markup language) Programmiersprache zur sprachbasierten Informationsausgabe. Der Server kann auf Content Server mit Daten unterschiedlichen Formats zugreifen und synthetisiert mit diesen Daten dynamisch ein VoiceXML Programmskript, das im Rahmen eines Sprachdienstes ausgeführt wird. Der Zugriff auf Content Server kann während eines interaktiven Sprachdialogs zwischen Dienstnutzer und VoxPortal™ Server abhängig vom Verlauf des Dialogs vorgenommen werden.

Zur Bestimmung einer angeforderten Ortsinformation kann der erfindungsgemäß benutzte Sprachserver auf einen Content Server mit Ortsinformationen (im Englischen mit Cartography Server bezeichnet) zugreifen. In diesem Cartography Server kann dann mit Hilfe der vom Teilnehmer angegebenen Informationen eine vom Teilnehmer bzw. Dienstnutzer gewünschte Information bestimmt werden. Die angeforderte Information kann von dem Cartography Server an den Sprachserver zur Ausgabe an den Teilnehmer übermittelt werden (Anspruch 4). Viele Cartography Server arbeiten mit einer eigenen Codierung bzw. mit eigenen standardisierten Koordinaten zur Lokalisierung von Orten. Um auf den Inhalt derartiger Server zuzugreifen, kann eine Formatierung der an den Cartography Server übermittelten Informationen im Sprachserver vorgenommen werden. Die vom Cartography Server an den Sprachserver übertragene, vom Teilnehmer angeforderte Information, wird dann im Regelfall für die Ausgabe an den Teilnehmer reformatiert bzw. angepasst werden müssen (Anspruch 5). Die Erfassung der durch den Teilnehmer angegebenen Spracheingaben kann im Rahmen eines von dem Sprachserver gesteuerten Sprachdialoges stattfinden. Im Rahmen dieses Sprachdialoges können von dem Sprachserver Eingabeaufforderungen für die zur Bestimmung der angeforderten Informationen benötigten Informationen an das Telekommunikationsendgerät ausgegeben werden (Anspruch 6). Ein derartiger Sprachdialog kann mit Hilfe eines Voice XML-Scripts realisiert werden (Anspruch 7). Die vom Teilnehmer angegebenen Sprachinformationen können mit Methoden analysiert werden, die auf Verfahren zur Mustererkennung und/oder auf Fuzzy Logic basierenden Verfahren beruhen (Anspruch 8). Die relevanten Teile der von dem Telekommunikationsendgerät übertragenen Spracheingaben können herausgefiltert und identifiziert werden (Anspruch 9).

Durch das Filtern der Spracheingaben und Identifizieren der relevanten Teile sind starke, durch Eingabeaufforderungen vorgegebene Einschränkungen bei der Eingabe von Sprachinformationen verzichtbar. Die vom Teilnehmer angegebenen Sprachinformationen können beispielsweise aus vollständigen Sätzen bestehen. Dagegen ist bei Sprachserver mit einer schlechteren Ausstattung an Analysesoftware denkbar, dass im Rahmen von Eingabeaufforderungen die Form der einzelnen Angaben, Namen, Worten oder Begriffen, vorgegeben wird.

Zusätzlich oder an Stelle von Lokalisierungsinformationen können im Rahmen des erfindungsgemäßen Verfahren dem Teilnehmer weitere relevante Informationen, wie z.B. über in seiner Nähe zur Verfügung stehende Dienste, übermittelt werden. Derartige Informationen können z.B. Restaurants, Geschäfte, Tankstellen, Krankenhäuser etc. und deren Spezialitäten, Warenangebote, Einrichtung etc. betreffen.

Im Folgenden wird der Erfindungsgegenstand anhand einer Figur im Rahmen eines Ausführungsbeispieles näher erläutert.

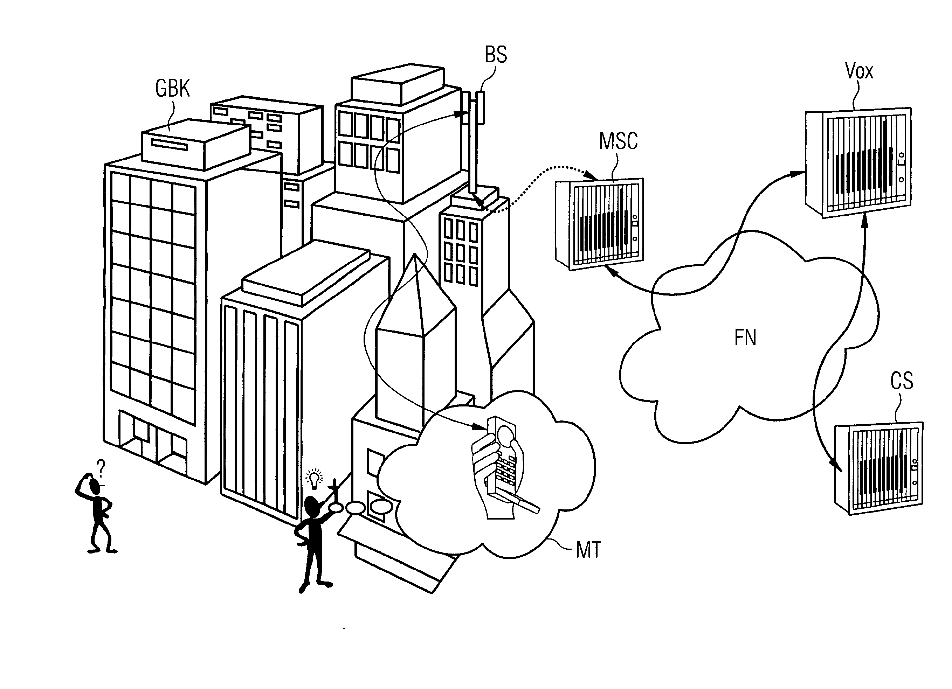

In der Figur ist ein Gebäudekomplex GBK dargestellt, innerhalb dessen ein Dienstnutzer eine Örtlichkeit, z.B. ein Konferenzzimmer, lokalisieren möchte. Der Dienstnutzer verfügt über ein Mobiltelefon MT und eine Information bezüglich des gesuchten Ortes. Bei dieser Information kann es sich z.B. um eine Zimmernummer handeln. Der Dienstnutzer nimmt einen Dienst, der auf dem erfindungsgemäßen Verfahren beruht, in Anspruch, um weitere Informationen zu erhalten, mit Hilfe deren er zu seinem Ziel gelangen kann. Der Dienstnutzer wählt eine für den Dienst spezifische Nummer und wird über eine Basisstation BS und eine Mobilvermittlungsstelle MSC (MSC: für Mobile Service Switching Center) über ein Netzwerk FN (FN: für Festnetz) mit einem Sprachserver Vox verbunden, der mit Hilfe von VoiceXML Skripten mit dem Dienstnutzer einen Sprachdialog führt. Das Mobiltelefon basiert beispielsweise auf der GSM (Global System für Mobile Communications) oder der UTMS (Universal Mobile Telecommunication System) Technik. Datenaustausch mittels Mobilfunk ist dabei durch eine gepunktete Linie und Datenaustausch über Leitungen durch ein durchgezogene Linie kenntlich gemacht. Das Festnetz FN kann beispielsweise durch ein analoges oder digitales Telefonnetz oder ein paketvermitteltes Netz, z.B. ein IP (Internet Protocol) Netz, gegeben sein. Der Dienstnutzer übermittelt daraufhin eine oder mehrere Informationen zur Identifikation des Gebäudekomplexes GBK und die Information z. B. Zimmernummer bezüglich des gesuchten Ortes. Mit Hilfe einer Sprachumwandlungssoftware konvertiert der Sprachserver die übertragenen Informationen in Datenform und übermittelt sie an einen Cartography Server CS. Der Cartography Server CS umfasst beispielsweise eine auf einer XML (Extensible Markup Language) basierende Datenbank. Die Verwendung des XML Formats hat den Vorteil, einer einfachen, dynamisch vornehmbaren Einbindung von an den Sprachserver Vox übertragenen Daten in VoiceXML Skripten. Im Cartography Server CS sind in digitaler Form Informationen zu dem Gebäudekomplex GBK und den Räumlichkeiten innerhalb des Gebäudekomplexes GBK gespeichert. Der Cartography Server CS ermittelt komplementäre Informationen bezüglich des gesuchten Ortes, beispielsweise die Bezeichnung des Teilgebäudes, wo sich der gewünschte Ort befindet. Diese komplementären Informationen werden an den Sprachserver Vox übermittelt, für Sprachausgabe formatiert und zum Dienstnutzer übertragen. Denkbar ist auch, dass der Dienstnutzer zusätzlich Hinweise bezüglich des Weges zu dem gesuchten Ort anfordert und von dem Cartography Server CS oder dem Sprachserver Vox aufgrund der von dem Cartography Server CS erhaltenen Informationen geeignete Navigationshinweise erstellt und an den Dienstnutzer ausgegeben werden.

## Patentansprüche

1. Verfahren zur Bereitstellung von Informationen, insbesondere zur Lokalisierung eines Ortes, mit Hilfe von Spracherkennung in einem Sprachserver (Vox), bei dem
- von einem Telekommunikationsendgerät (MT) eine Sprachverbindung zu einem Sprachserver (Vox) hergestellt wird,
- Spracheingaben von dem Telekommunikationsendgerät (MT) an den Sprachserver (Vox) übertragen werden, wodurch eine Information angefordert wird,
- die Spracheingaben im Sprachserver (Vox) mittels Spracherkennung analysiert werden,
- mit Hilfe der analysierten Spracheingaben die angeforderte Information bestimmt wird, und
- die angeforderte Information als Sprachinformation von dem Sprachserver (Vox) an das Telekommunikationsendgerät (MT) übermittelt wird.

2. Verfahren nach Anspruch 1,
**dadurch gekennzeichnet,**
- **dass** das Telekommunikationsendgerät (MT) durch ein Mobiltelefon gegeben ist.

3. Verfahren nach einem der vorhergehenden Ansprüche,
**dadurch gekennzeichnet,**
- **dass** die angeforderte Information eine Lokalisierungsinformation ist.

4. Verfahren nach Anspruch 3,
**dadurch gekennzeichnet,**
- **dass** für die Bestimmung der angeforderten Information der Sprachserver auf einen Server mit Ortsinformationen (CS) zugreift,
- **dass** im Server mit Ortsinformationen (CS) mit Hilfe der analysierten Spracheingaben die angeforderte Information bestimmt wird, und
- **dass** die angeforderte Information von dem Server mit Ortsinformationen (CS) an den Sprachserver (Vox) übermittelt wird.

5. Verfahren nach Anspruch 4,
**dadurch gekennzeichnet,**
- **dass** zumindest ein Teil der analysierten Spracheingaben im Sprachserver (Vox) für die Benutzung durch den Server mit Ortsinformationen (CS) formatiert wird,
- **dass** der formatierte Teil der analysierten Spracheingaben an den Server mit Ortsinformationen (CS) übermittelt wird, und
- **dass** die von dem Server mit Ortsinformationen (CS) bestimmte Information im Sprachserver (Vox) für Sprachausgabe angepasst wird.

6. Verfahren nach einem der vorhergehenden Ansprüche,
**dadurch gekennzeichnet,**
- **dass** die Spracheingaben von dem Telekommunikationsendgerät (MT) im Rahmen eines Sprachdialogs an den Sprachserver (Vox) übertragen werden und
- **dass** im Rahmen des Sprachdialogs von dem Sprachserver (Vox) Eingabeaufforderungen für zur Bestimmung der angeforderten Information benötigte Informationen an das Telekommunikationsendgerät (MT) übermittelt werden.

7. Verfahren nach Anspruch 6,
**dadurch gekennzeichnet,**
- **dass** von dem Sprachserver (Vox) der Sprachdialog mit Hilfe eines VoiceXML Skripts realisiert wird.

8. Verfahren nach einem der vorhergehenden Ansprüche,
**dadurch gekennzeichnet,**
- **dass** die von dem Telekommunikationsendgerät (MT) übertragenen Spracheingaben mit Hilfe von Verfahren zur Mustererkennung (pattern recognition) und/oder auf Fuzzy Logic beruhenden Verfahren analysiert werden.

9. Verfahren nach einem der vorhergehenden Ansprüche,
**dadurch gekennzeichnet,**
- **dass** die für die Bestimmung der angeforderten Information relevanten Teile der von dem Telekommunikationsendgerät (MT) übertragenen Spracheingaben herausgefiltert und identifiziert werden.

10. Verfahren nach einem der vorhergehenden Ansprüche,
**dadurch gekennzeichnet,**
- **dass** die angeforderte Information die Lokalisierung eines Orts in einem Gebäude, Gebäudekomplex (GBK) oder Gelände betrifft.

11. Verfahren nach Anspruch 3,
**dadurch gekennzeichnet,**
- **dass** die Lokalisierungsinformation durch den Aufenthaltsort oder das Ziel eines Telekommunikations-Teilnehmers gegeben ist.
